# EUROPEAN PATENT APPLICATION

(11) **EP 2 908 231 A1**
(43) Date of publication of application: **19.08.2015**
(21) Application number: 13801169.7
(22) Date of filing: 21.06.2013
(51) Int. Cl.: G06F 3/048

(54) **OBJECT SUSPENSION REALIZING METHOD AND DEVICE**

(30) Priority: 15.10.2012 CN 201210388937
(71) Applicant: ZTE Corporation, Shenzhen, Guangdong 518057 (CN)
(72) Inventor: XIANG, Bingxin, Shenzhen Guangdong 518057 (CN); HOU, Jiong, Shenzhen Guangdong 518057 (CN); HUANG, Wei, Shenzhen Guangdong 518057 (CN); WEN, Jiexin, Guangdong 518057 (CN)
(74) Representative: Modiano, Micaela Nadia
(86) International application number: PCT/CN2013/077646
(87) International publication number: WO 2013/182089

(57) **Abstract**

An object suspension realizing method and apparatus are disclosed. The method includes: a terminal device suspending and displaying a suspended object on a touch display screen, the suspended object comprising one or more function keys configured by a user, and each function key being configured with an operation instruction; upon capturing the operation of the user on the function key in the suspended object, the terminal device generating and executing the operation instruction of the function key. The method and apparatus according to the embodiments of the present invention can configure a key and an operation instruction as required by the user in a dynamically suspended and variably displayed object, and can replace the function of a physical key by clicking on a touch screen, thus greatly improving use flexibility and convenience, and preventing problems caused by a damaged physical key.

## Description

### Technical Field

The present invention relates to the technical field of terminal devices with a touch display screen, and in particular, to an object suspension realizing method and apparatus.

### Background of the Related Art

Nowadays, with the development of information society, people need to acquire all kinds of public information, and a public information transmission system with the touch screen technology as an interaction window intuitionally and vividly introduces various kinds of information to people in many forms such as characters, images, music, commentary, animations and videos etc. by using the advanced computer technology, thereby bringing great convenience to people. The touch screen, as a terminal input device, is the most simple, convenient and natural way of human-computer interaction. The touch screen is mainly applied in mobile communication terminals, public information query, industrial control, military command, electronic games, song requesting and order dishes, and forward sales of real estate etc. Especially in recent years, with the rapid development of mobile Internet technology, the application of touch screen devices is very popular on intelligent terminal devices for mobile internet communication such as mobile phones and tablets dominant in 3rd Generation (3G) and 4th Generation (4G) etc.

At present, on an intelligent terminal device with a touch screen, in order to improve operation efficiency, most devices are also attached with physical keys or fix virtual navigation keys. For example, on the Android smart phones, there are physical keys commonly used by users, such as return keys, menu keys etc., or a manner of virtual keys fixed on the virtual navigation bar at the bottom of a Liquid Crystal Display (LCD) screen is used. However, these two approaches have the following problems or deficiencies.

If a manner of physical keys is used, especially for common physical keys which are frequently operated, the keys may easily be damaged. Thereby, a user cannot complete original functions of the physical keys, which brings inconvenience to the user, or even results in a situation that the device cannot be used.

If a manner of virtual keys fixed on the virtual navigation bar at the bottom of the LCD screen is used, due to the existence of the virtual navigation bar, the display area of the screen is reduced.

No matter whether the manner of physical keys or the manner of fixed virtual keys is used, the positions thereof are always fixed. Then, for a common device such as an intelligent terminal with a large display screen etc., the user must operate it with both hands. Therefore, user's operation with a single hand cannot be satisfied, let alone operation with a single hand in the habits of left or right mode.

In addition, in the above manners, as the display area of the keys is fixed, a number of key event objects accommodated in the area is also very limited, and cannot be changed according to user's habits.

### Summary of the Invention

The embodiments of the present invention provide an object suspension realizing method and apparatus, which can implement custom configuration of the operation instruction in a dynamically suspended and variably displayed object.

The embodiments of the present invention provide an object suspension realizing method, comprising:
a terminal device suspending and displaying a suspended object on a touch display screen, wherein the suspended object comprises one or more function keys configured by a user, and each function key is configured with an operation instruction; and
upon capturing the operation of the user on the function key in the suspended object, the terminal device generating and executing the operation instruction of the function key.

Alternatively, the step of the terminal device generating and executing the operation instruction of the function key comprises:
after parsing the operation instruction, the terminal device distributing the operation instruction to a current application object by means of system instruction, and the current application object executing a response event of the operation instruction according to the system instruction.

Alternatively, the method further comprises:
the terminal device configuring a display manner and/or operation instruction of the function key in the suspended object through a configuration file, or performing addition, modification, or deletion configuration on the function key in the suspended object.

Alternatively, the method further comprises:
the terminal device moving a display position of the suspended object according to a first specified operation of the user on the suspended object.

Alternatively, the method further comprises:
the terminal device implementing zoom-in, zoom-out and/or deformation of a display area of the suspended object according to a second specified operation of the user on the suspended object.

The embodiments of the present invention further provide an object suspension realizing apparatus applied in a terminal device, wherein the apparatus comprises:
a suspended object presentation control unit, configured to suspend and display the suspended object on a touch display screen of the terminal device; and
a suspended object custom configuration unit, configured to configure one or more function keys in the suspended object, and configure an operation instruction of each function key; and
a suspended object response control unit, configured to monitor an operation of a user, upon capturing the operation of the user on the function key in the suspended object, generate the operation instruction of the function key, and initiate a response event of the operation instruction.

Alternatively, the apparatus further comprises:
a suspended object position change control unit, configured to move a display position of the suspended object according to a first specified operation of the user on the suspended object.

Alternatively, the suspended object custom configuration unit is further configured to configure a display manner and/or operation instruction of the function key in the suspended object through a configuration file, or perform addition, modification, or deletion configuration on the function key in the suspended object.

Alternatively, the suspended object presentation control unit is further configured to implement zoom-in, zoom-out and/or deformation of a display area of the suspended object according to a second specified operation of the user on the suspended object.

Alternatively, the suspended object response control unit is configured to initiate a response event of the operation instruction by reporting the operation instruction to a processing system of the terminal device.

The above method and apparatus according to the embodiments of the present invention at least have the following advantages.

The window is dynamically suspended, which compared with the traditional technology of adding a row of buttons at the bottom, does not occupy the area of the display screen, and will not reduce the display range of the touch screen, so that the area which can be used by the user correspondingly becomes larger.

With the customization of the key configuration, the user can configure the keys as required, which enhances the use flexibility of keys, and improving the user experience.

By replacing the physical keys with the manner of touch click and realizing functions of corresponding physical keys through clicking on the touch screen, the use convenience is largely enhanced, which prevents problems caused by a damaged physical key.

### Brief Description of Drawings

The accompanying drawings described herein are used to provide a further understanding of the embodiments of the present invention and constitute a part of this application, and the schematic embodiments of the present invention and the descriptions thereof are used to explain the technical schemes of the present invention and do not constitute an improper definition of the technical schemes of the present invention. In the accompanying drawings:
Fig. 1 is a structural diagram of constitution of an object suspension realizing apparatus according to an embodiment of the present invention.
Fig. 2 is a diagram of an operational flow of a suspended object response control unit according to an embodiment of the present invention.
Fig. 3 is a diagram of an operational flow of a suspended object custom configuration unit according to an embodiment of the present invention.
Fig. 4 is a diagram of an operational flow of a user according to an embodiment of the present invention.

### Preferred Embodiments of the Invention

The embodiments provide an object suspension realizing method, comprising:
a terminal device suspending and displaying a suspended object on a touch display screen, the suspended object comprising one or more function keys configured by a user, and each function key being configured with an operation instruction; and
upon capturing the operation of the user on the function key in the suspended object, the terminal device generating and executing the operation instruction of the function key.

Alternatively, the step of the terminal device generating and executing the operation instruction of the function key comprises:
after parsing the operation instruction, the terminal device distributing the operation instruction to a current application object by means of system instruction, and the current application object executing a response event of the operation instruction according to the system instruction.

In the present scheme, the dynamic suspension technology is primarily used to implement the method for customization of function key configuration, and when the function keys in the suspended object which is dynamically suspended are operated by a user, the current application objects can be controlled.

Alternatively, the specific implementations of the above scheme may comprise the following primary steps.

In step 1, configuration customized by a user is read in a configuration file, then an operation instruction is initialized, and the customized operation instruction is associated with the displayed suspended object.

In step 2, after the configured suspended object is processed by the display on top technology, the configured suspended object is always displayed on the top layer, so as to achieve a suspension effect of displaying the window of the suspended object on the user operation interface.

Alternatively, during the initialization, the suspended object may occupy a small part of the display area.

In step 3, the operation (or action) of the user is captured, and after the user clicks on and moves the suspended object, the area of the suspended window is re-laid out, and zoom-in or zoom-out display of the window and some dynamic effects such as special animation etc. may be achieved according to the movement or action of the user's finger.

In step 4, at the same time, an operation of the user on the function keys in the area of the suspended object may also be captured, and when there is an operation of the user, an operation instruction is constructed.

In step 5, the operation instruction constructed in step 4 is transmitted to the system.

In step 6, after the system receives the operation instruction transmitted in step 5, the system translates the operation instruction, then constructs a system instruction, and distributes the system instruction to the current object.

In step 7, after receiving the system instruction distributed by the system, the current object responds to the system instruction with a corresponding operation.

For convenience of description of the embodiments of the present invention, the implementations of the technical schemes of the present invention will be further described in detail below in conjunction with accompanying drawings and specific embodiments. It should be illustrated that without a conflict, the embodiments in the present application and features in the embodiments can be combined with each other randomly.

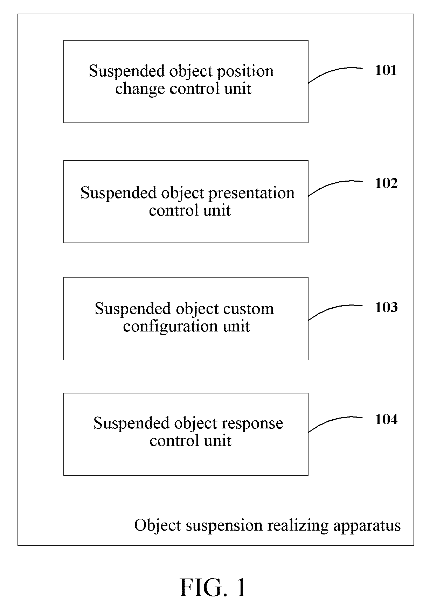

As shown in Fig. 1, illustrated is a structural diagram of constitution of an object suspension realizing apparatus according to an embodiment of the present invention. The apparatus according to the present embodiment primarily comprises a suspended object position change control unit 101, a suspended object presentation control unit 102, a suspended object custom configuration unit 103, and a suspended object response control unit 104.

The suspended object position change control unit 101 (which is a selectable module) is primarily responsible for controlling the change of the position of the window of the suspended object, and re-laying out or changing the position of the window by capturing an operation of the user.

The suspended object position change control unit 101 may move the display position of the suspended object according to a first specified operation of the user.

Wherein, the first specified operation comprises: implementing single-click on the suspended object and moving the suspended object, implementing double-click on the suspended object and moving the suspended object, and clicking on the suspended object and then clicking on the target display area etc.

The suspended object presentation control unit 102 is primarily responsible for controlling the suspended object to achieve an effect of window suspension; in addition, the suspended object presentation control unit 102 also supports change of the size, shape etc. of the area of the suspended object.

The suspended object presentation control unit 102 may amplify, zoom out and/or deform the display area of the suspended object according to a second specified operation of the user.

Wherein, the second specified operation comprises a user's finger selecting the suspended object, the finger's action, and the finger's moving direction etc.

The suspended object custom configuration unit 103 provides the user with a function of customizing the interface and structure of the window, to achieve the custom configuration function, which primarily comprises functions such as read, storage, modification, presentation etc. of the configuration file.

The suspended object response control unit 104 is primarily responsible for monitoring the operation of the user, and if the user clicks on the area of the suspended object, it needs to construct (or generate) an operation instruction, and initiate an event flow and instruction distribution of the area of the suspended object.

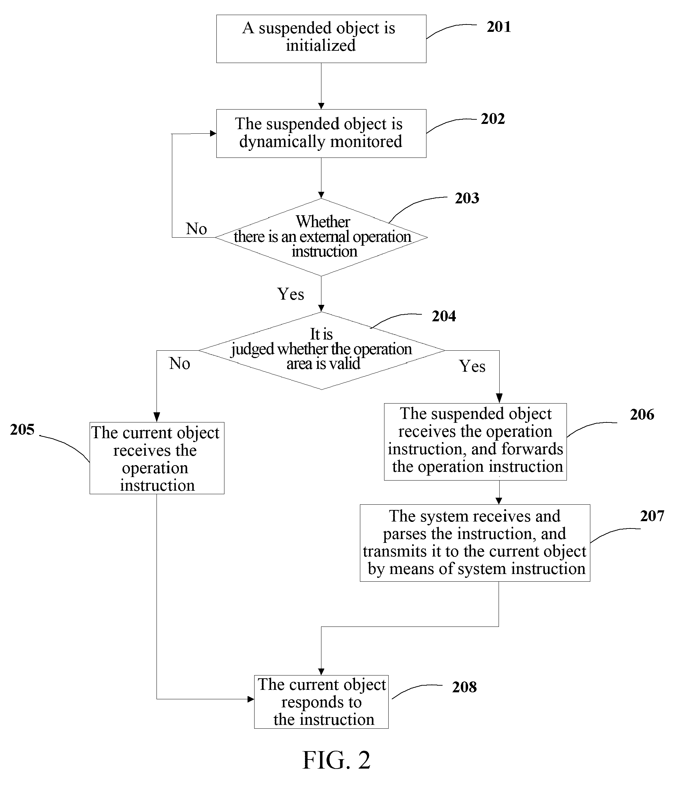

As shown in Fig. 2, illustrated is a diagram of an operational flow of a suspended object response control unit according to an embodiment of the present invention. The suspended object response control unit primarily achieves capturing the operation or action of a user, responding to the action of the user, and implementing processes. The specific operational flow of the present embodiment comprises the following steps.

In step 201, the suspended object is initialized, an interface is initialized through a configuration file defined by the user, and a function operation interface pre-configured by the user is displayed.

In step 202, the suspended object is dynamically monitored, and an external operation instruction is responded by monitoring the operation of the user.

In step 203, it is judged whether there is an external operation instruction, and if so, the next step 204 is performed, otherwise, monitoring of the operation of the user in step 202 continues to be performed.

In step 204, it is judged whether the operation area is valid, if so, step 206 is performed; otherwise, step 205 is performed.

In step 205, if the operation area is invalid, the current object receives the operation instruction.

In step 206, if the operation area is valid, the suspended object receives the operation instruction, and forwards the operation instruction to the system.

After the suspended object receives the click event, the suspended object transfers the click event to the response module, which will construct an operation instruction according to the area of the click event, distribute the operation instruction to the system, and after receiving the operation instruction, the system translates and distributes the operation instruction to the current object.

In step 207, the system receives the operation instruction, parses the operation instruction, and then transmits the operation instruction to the current object by means of system instruction.

In step 208, the current object responds to the system instruction which is directly obtained or the operation instruction which is indirectly obtained through the suspended object, and then implements the response event of the operation instruction.

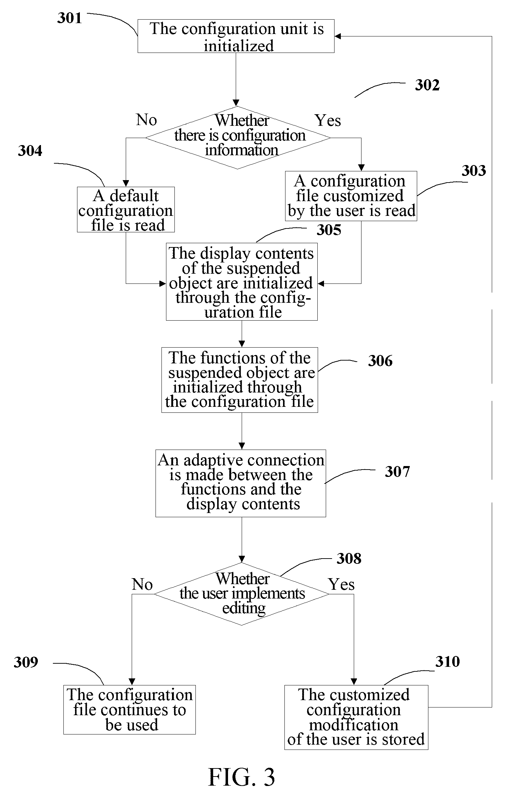

As shown in Fig. 3, illustrated is a diagram of an operational flow of a suspended object custom configuration unit according to an embodiment of the present invention. The configuration contents of the suspended object are customized, added, deleted or modified according to the user's hobbies through the configuration file customized by the user, to implement customization of the interface of the operation area of the suspended object. The specific operational flow of the present embodiment comprises the following steps.

In step 301, the suspended object custom configuration unit is initialized, the suspended object is created, and the configuration file and function module/unit are loaded.

Wherein, the configuration file may have not been configured or may have been configured.

In step 302, it is judged whether there is configuration information, if so, step 303 is performed, and if not, step 304 is performed.

In step 303, the configuration file customized by the user is read.

If the file has been configured, the configured file is read, and the function module/unit is initialized through the configuration file.

In step 304, a default configuration file is read.

If the file has not been configured, the default configuration file of the system is read for loading.

In step 305, the display contents of the operation interface of the suspended object are initialized through the read configuration file, and the initialized operation interface is laid out on the suspended object in accordance with configuration according to the information of the configuration file.

In step 306, the configuration function of the suspended object is initialized through the configuration file. A function block matched with the operation interface is constructed by acquiring the operation instruction of the configuration file.

In step 307, an adaptive connection is made between the function and the display contents. The adaptive connection is made through the operation interface constructed in steps 305 and 306 and the operation instruction.

In step 308, it is judged whether the user implements editing. There is an editing function in the function step, and after the function is initiated, operations such as addition, deletion, or modification etc. may be performed on the configuration file.

In step 309, if the editing flow is not initiated, a normal processing flow continues, and the current configuration modification state is maintained.

In step 310, after the editing flow is initiated, the configuration may be customized according to hobbies, and operations such as addition, deletion, or modification etc. are performed on the current function interface, and after the operations are completed, the configuration file is synchronously updated; and the modification made to the edit by the user is stored in the record file, then a load flow is re-initiated, and the customized configuration file which is newly edited by the user is re-loaded, initiated, and adaptively connected. Then, the user may obtain the operation interface which is newly edited.

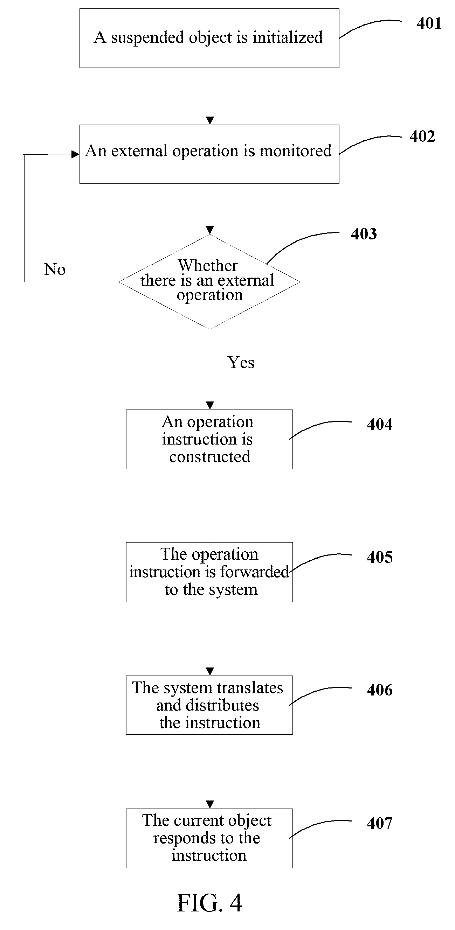

As shown in Fig. 4, illustrated is a diagram of an operational flow of a user according to an embodiment of the present invention. The specific operational flow of the present embodiment comprises the following steps.

In step 401, the suspended object is initialized, the keys which are configured by the user are read, the keys are configured on the operation interface, and a suspension effect is provided.

In step 402, the operation of the user on the touch screen is monitored, and an external operation event of the user is captured.

In step 403, it is judged whether there is an external operation, if no, the flow of monitoring in step 402 continues to be performed, and if so, step 404 is performed.

In step 404, the operation instruction is constructed. When it is judged that there is an external operation, the operation instruction is constructed through the operation area.

In step 405, the operation instruction constructed in step 404 is forwarded to the system.

In step 406, the operation instruction is translated and distributed by the system. After the system receives the operation instruction in step 405, the system will translate the instruction and distribute the instruction to the current object.

In step 407, the current object responds to the instruction. When the system translates and distributes the instruction in step 406, the current object will respond according to the instruction.

The above description is only the preferred embodiments of the present invention and it is not intended to limit the present invention, the present invention can also have a variety of other embodiments. Without departing from the spirit and essence of the present invention, those skilled in the art can make various corresponding changes and variations based on the embodiments of the present invention, but all these changes and variations should belong to the protection scope of the appended claims in the present invention.

Obviously, those skilled in the art should understand that each module or each step of the aforementioned present invention can be implemented with general computing devices, and can be integrated in a single computing device, or distributed onto a network consisting of a plurality of computing devices; alternatively, they can be implemented with program codes executable by the computing devices, and therefore, they can be stored in storage devices to be executed by the computing devices, and in some cases, the steps illustrated or described can be executed in an order different from that described herein; alternatively, they are respectively made into a plurality of integrated circuit modules; alternatively, it is implemented with making several modules or steps of them into a single integrated circuit module. Thus, the embodiments of the present invention are not limited to any specific combinations of hardware and software.

### Industrial Applicability

The method and apparatus according to the embodiments of the present invention can configure a key and an operation instruction as required by the user in a dynamically suspended and variably displayed object, and can replace the function of a physical key by clicking on a touch screen, thus greatly improving use flexibility and convenience, and preventing problems caused by a damaged physical key.

## Claims

1. An object suspension realizing method, comprising:
a terminal device suspending and displaying a suspended object on a touch display screen, wherein the suspended object comprises one or more function keys configured by a user, and each function key is configured with an operation instruction; and
upon capturing the operation of the user on the function key in the suspended object, the terminal device generating and executing the operation instruction of the function key.

2. The method according to claim 1, wherein, the step of the terminal device generating and executing the operation instruction of the function key comprises:
after parsing the operation instruction, the terminal device distributing the operation instruction to a current application object by means of system instruction, and the current application object executing a response event of the operation instruction according to the system instruction.

3. The method according to claim 1, further comprising:
the terminal device configuring a display manner and/or operation instruction of the function key in the suspended object through a configuration file, or performing addition, modification, or deletion configuration of the function key in the suspended object.

4. The method according to claim 1, 2 or 3, further comprising:
the terminal device moving a display position of the suspended object according to a first specified operation of the user on the suspended object.

5. The method according to claim 1, 2 or 3, further comprising:
the terminal device implementing zoom-in, zoom-out and/or deformation of a display area of the suspended object according to a second specified operation of the user on the suspended object.

6. An object suspension realizing apparatus applied in a terminal device, wherein the apparatus comprises:
a suspended object presentation control unit, configured to suspend and display the suspended object on a touch display screen of the terminal device; and
a suspended object custom configuration unit, configured to configure one or more function keys in the suspended object, and configure an operation instruction of each function key; and
a suspended object response control unit, configured to monitor an operation of a user, upon capturing the operation of the user on the function key in the suspended object, generate the operation instruction of the function key, and initiate a response event of the operation instruction.

7. The apparatus according to claim 6, further comprising:
a suspended object position change control unit, configured to move a display position of the suspended object according to a first specified operation of the user on the suspended object.

8. The apparatus according to claim 6 or 7, wherein,
the suspended object custom configuration unit is further configured to configure a display manner and/or operation instruction of the function key in the suspended object through a configuration file, or perform addition, modification, or deletion configuration of the function key in the suspended object.

9. The apparatus according to claim 8, wherein,
the suspended object presentation control unit is further configured to implement zoom-in, zoom-out and/or deformation of a display area of the suspended object according to a second specified operation of the user on the suspended object.

10. The apparatus according to claim 6 or 7, wherein,
the suspended object response control unit is configured to initiate a response event of the operation instruction by reporting the operation instruction to a processing system of the terminal device.
